(19) Europäisches Patentamt
European Patent Office
Office européen des brevets

(11) **EP 1 998 978 B1**

(12) **EUROPÄISCHE PATENTSCHRIFT**

(45) Veröffentlichungstag und Bekanntmachung des Hinweises auf die Patenterteilung:
**14.07.2010 Patentblatt 2010/28**

(51) Int Cl.:
***B60K 31/00*** *(2006.01)*     ***B60W 10/06*** *(2006.01)*
***B60W 10/08*** *(2006.01)*     ***B60W 20/00*** *(2006.01)*

(21) Anmeldenummer: **07726751.6**

(22) Anmeldetag: **09.03.2007**

(86) Internationale Anmeldenummer:
**PCT/EP2007/052229**

(87) Internationale Veröffentlichungsnummer:
**WO 2007/107463 (27.09.2007 Gazette 2007/39)**

(54) **VERFAHREN ZUM BETRIEB EINES HYBRIDANTRIEBS FÜR EIN FAHRZEUG**

METHOD FOR OPERATING A HYBRID DRIVE FOR A VEHICLE

PROCÉDÉ POUR FAIRE FONCTIONNER UNE MOTORISATION HYBRIDE POUR UN VÉHICULE

(84) Benannte Vertragsstaaten:
**DE FR GB IT**

(30) Priorität: **21.03.2006 DE 102006012860**

(43) Veröffentlichungstag der Anmeldung:
**10.12.2008 Patentblatt 2008/50**

(73) Patentinhaber: **Robert Bosch GmbH**
**70442 Stuttgart (DE)**

(72) Erfinder:
• **MECKS, Michael**
**32120 Hiddenhausen (DE)**
• **GLORA, Michael**
**71706 Markgroeningen (DE)**
• **FALKENSTEIN, Jens-Werner**
**73434 Aalen (DE)**

(56) Entgegenhaltungen:
**EP-A- 1 712 395**     **EP-A2- 1 072 460**
**US-A- 5 586 613**     **US-A- 6 164 400**
**US-A1- 2005 088 139**

**Beschreibung**

Die Erfindung betrifft ein Verfahren zum Betrieb eines Hybridantriebs für ein Fahrzeug mit mindestens einem Verbrennungsmotor und mit mindestens einem Elektromotor, wobei der Verbrennungsmotor und der Elektromotor in einem Hybridbetrieb betreibbar sind, der eine temporäre Leistungssteigerung durch ein Ergänzen verbrennungsmotorischer Leistung durch elektromotorische Leistung ermöglicht.

Stand der Technik

Ein derartiges Verfahren zum Betrieb eines Hybridantriebs für ein Fahrzeug ist aus dem gattungsbildenden Dokument US 5,586,613 bekannt. Eine temporäre Leistungssteigerung durch ein Ergänzen verbrennungsmotorischer Leistung durch elektromotorische Leistung (Boostbetrieb) wird insbesondere bei Hybridantriebskonzepten verwandt, bei denen gegenüber einem konventionellen Antrieb der Verbrennungsmotor kleiner dimensioniert ist und die verbrennungsmotorische Leistung dementsprechend geringer ist (Downsizingkonzept). Die verbrennungsmotorische Leistung wird genutzt, um eine Grundlast zu tragen, während die zusätzliche elektromotorische Leistung hauptsächlich genutzt wird, um zum Beispiel bei Beschleunigungsvorgängen die Dynamik des Hybridantriebs zu verbessern. Da der Verbrennungsmotor im oberen Drehzahlbereich ein hohes Drehmoment liefert und der Elektromotor im niedrigen Drehzahlbereich ein hohes Drehmoment liefert, kompensiert der Elektromotor auftretende Leistungsschwächen des Verbrennungsmotors besonders gut. Die Energiemenge eines dem Elektromotor zugeordneten elektrischen Speichers ist jedoch begrenzt, sodass eine Leistungssteigerung über die verbrennungsmotorische Leistung hinaus nur temporär erfolgen kann. Auf derartige Phasen der Leistungssteigerung durch den Elektromotor müssen entsprechend lange Phasen folgen, in denen der elektrische Speicher wieder aufgeladen wird. In diesen Phasen steht dem Hybridantrieb nur die verbrennungsmotorische Leistung abzüglich einer Ladeleistung zum Aufladen eines den Elektromotor speisenden elektrischen Speichers zur Verfügung. Um den elektrischen Speicher in einem entsprechenden Ladezustand zu halten, muss die temporäre Leistungssteigerung begrenzt werden.

Vorteile der Erfindung

Das erfindungsgemäße Verfahren zum Betrieb eines Hybridantriebs für ein Fahrzeug zeichnet sich dadurch aus, dass die temporäre Leistungssteigerung nur bis zum Erreichen einer Grenzgeschwindigkeit zugelassen wird, die von einer vom jeweiligen Fahrwiderstand abhängigen Höchstgeschwindigkeit im verbrennungsmotorischen Betrieb abhängt. Bei einer Begrenzung der temporären Leistungssteigerung in Abhängigkeit von einer Höchstgeschwindigkeit, die bei einem Betrieb nur mit dem Verbrennungsmotor zu erreichen ist, wird berücksichtigt, dass nach einer Phase einer temporären Leistungssteigerung der Verbrennungsmotor alleine das Fahrzeug antreiben muss. Die Höchstgeschwindigkeit im verbrennungsmotorischen Betrieb ist jedoch von dem jeweils vorliegenden Fahrwiderstand abhängig und kann stark variieren. Der jeweilige Fahrwiderstand setzt sich insbesondere aus einem Rollwiderstand, einem Luftwiderstand und einem Steigungswiderstand des Fahrzeugs zusammen.

Nach einer Weiterbildung der Erfindung ist vorgesehen, dass der Fahrwiderstand aus sich aufgrund des jeweiligen Fahrzustandes ändernden Größen, insbesondere Ausgangsmomenten des Hybridantriebs, Fahrzeugbeschleunigung und Massenträgheitsmomenten rotierender Fahrzeugteile, sowie der Fahrzeugmasse bestimmt, insbesondere berechnet wird. Um die vom jeweiligen Fahrwiderstands abhängige Höchstgeschwindigkeit im verbrennungsmotorischen Betrieb zu bestimmen, muss zunächst der Fahrwiderstand bestimmt werden. Dieser ergibt sich aus einer vom Ausgangsmoment des Hybridantriebs abhängigen Zugkraft des Hybridantriebs abzüglich einer Beschleunigungskraft, die für die Beschleunigung des Fahrzeugs benötigt wird. Diese Beschleunigungskraft ist das Produkt aus der Fahrzeugbeschleunigung und der Fahrzeugmasse, wobei die Massenträgheitsmomente rotierender Fahrzeugteile als Massenanteil verrechnet werden.

Es ist zweckmäßig, dass die Höchstgeschwindigkeit im verbrennungsmotorischen Betrieb von einem jeweiligen Ladezustand mindestens eines, dem Elektromotor zugeordneten elektrischen Speichers und einem resultierenden Leistungsbedarf eines den elektrischen Speicher aufladenden Generators, sowie von einem Leistungsbedarf eines Bordnetzes des Fahrzeugs abhängig ist. Bei einem sich an eine zeitliche Phase der temporären Leistungssteigerung anschließenden verbrennungsmotorischen Betrieb muss der Verbrennungsmotor den Leistungsbedarf des den elektrischen Speicher aufladenden Generators und zusätzlich den Leistungsbedarf des Bordnetzes decken, um einen Hybridbetrieb mit temporärer Leistungssteigerung auf Dauer zu gewährleisten. Dem Antrieb steht somit nur die Leistung des Verbrennungsmotors abzüglich des elektrischen Leistungsbedarfs zur Verfügung.

Ferner ist es vorteilhaft, wenn die temporäre Leistungssteigerung ausschließlich für Beschleunigungsvorgänge genutzt wird. Derartige, insbesondere zeitlich begrenzte Beschleunigungsvorgänge ergeben sich aus typischen Fahrsituationen im Straßenverkehr, wie zum Beispiel einem Anfahren des Fahrzeugs oder einem Überholvorgang auf einer Landstraße, beziehungsweise einer Autobahn. Eine temporäre Leistungssteigerung durch elektromotorische Leistung zum Überwinden des Fahrwiderstands ist dagegen in vielen Fällen nicht sinnvoll, da entsprechende Fahrsituationen über eine deutlich längere Zeitspanne andauern als es der Ladezustand des elektrischen Speichers zulässt.

Vorzugsweise ist vorgesehen, dass die Grenzgeschwindigkeit der jeweiligen Höchstgeschwindigkeit im verbrennungsmotorischen Betrieb entspricht. Im einfachsten Fall wird ab dem Erreichen der jeweiligen Höchstgeschwindigkeit im verbrennungsmotorischen Betrieb eine temporäre Leistungssteigerung durch elektromotorische Leistung nicht mehr zugelassen.

Nach einer Weiterbildung der Erfindung ist vorgesehen, dass die temporäre Leistungssteigerung zur temporären Erhöhung der Fahrzeuggeschwindigkeit über die Höchstgeschwindigkeit im verbrennungsmotorischen Betrieb genutzt wird. Eine derartige Erhöhung der Fahrzeuggeschwindigkeit kann zeitlich begrenzt erlaubt werden, wenn zum Beispiel der elektrische Speicher vollständig aufgeladen oder fast vollständig aufgeladen ist.

Ferner ist es vorteilhaft, wenn in Abhängigkeit der möglichen Übersetzungen eines Antriebsgetriebes die jeweilige Höchstgeschwindigkeit im verbrennungsmotorischen Betrieb ermittelt wird. Die Höchstgeschwindigkeit im verbrennungsmotorischen Betrieb ist dabei nicht auf ein bestimmtes Übersetzungsverhältnis - zum Beispiel des jeweilig gewählten Übersetzungsverhältnisses - bezogen zu ermitteln, sondern wird als Maximum über alle möglichen Übersetzungen ermittelt.

Insbesondere ist vorgesehen, dass kinetische Energie des Fahrzeugs beim Bremsen zum Aufladen des elektrischen Speichers durch den Generator genutzt wird. Bei Fahrzuständen, die durch sich abwechselnde Phasen von Beschleunigung und anschließendem Abbremsen -wie zum Beispiel im Stadtverkehr- gekennzeichnet sind, kann der Generator in den Bremsphasen durch die kinetische Energie des Fahrzeugs angetrieben werden. Eine derartige Rückgewinnung der Energie (Rekuperation) sorgt für ein schnelleres Wiederaufladen des elektrischen Speichers und für einen geringeren Kraftstoffverbrauch.

Nach einer Weiterbildung der Erfindung ist vorgesehen, dass die temporäre Leistungssteigerung nur bis zu einer vorgegebenen Maximalzeitspanne möglich ist. Die temporäre Leistungssteigerung kann neben anderen Beschränkungen auch auf eine Maximalzeitspanne beschränkt sein, an die sich zum Beispiel eine ebenfalls vorgegebene Minimalzeitspanne mit rein verbrennungsmotorischem Antrieb und einem Wiederaufladen des elektrischen Speichers anschließt.

Vorzugsweise ist vorgesehen, dass die temporäre Leistungssteigerung nur bei einem Ladezustand des elektrischen Speichers oberhalb einer vorgegebenen Ladungsschwelle erfolgt. Die Ladungsschwelle kann zum Beispiel ein Grenzwert sein, unterhalb dessen eine temporäre Leistungssteigerung nicht mehr über einen hinreichend langen Zeitraum erfolgen kann und/oder nicht genug elektrische Energie vorhanden ist, um den abgeschalteten Verbrennungsmotor zu starten.

Ferner ist es vorteilhaft, wenn der elektrische Speicher eine wiederaufladbare Batterie ist. Eine solche Batterie ist einfach handhabbar, sicher und lässt ein direktes Speichern von elektrischer Energie zu.

Schließlich ist vorgesehen, dass der Elektromotor den Generator bildet. Kann der Elektromotor auch im generatorischen Betrieb arbeiten, so spart dies einen separaten Generator und gegebenenfalls ein zusätzliches Getriebe, das Räder und Generator verbindet.

Zeichnungen

Die Erfindung wird nachfolgend in einem Ausführungsbeispiel anhand der zugehörigen Zeichnungen näher erläutert. Es zeigt:

Figur 1     ein Diagramm, bei dem ein Beschränkungsfaktor über einem Fahrwiderstand des Fahrzeugs aufgetragen ist,

Figur 2     ein Diagramm, bei dem Fahrwiderstand, maximale Zugkraft im verbrennungsmotorischen Betrieb und maximale Zugkraft im leistungsgesteigerten Betrieb über einer Fahrzeuggeschwindigkeit aufgetragen ist und

Figur 3     ein Diagramm, bei dem Fahrwiderstand, Fahrwider- stand mit erhöhtem Steigungswiderstand, maximale Zugkraft im verbrennungsmotorischen Betrieb und ma- ximale Zugkraft im leistungsgesteigerten Betrieb über der Fahrzeuggeschwindigkeit aufgetragen ist.

Ein nicht dargestellter Hybridantrieb eines Fahrzeugs besteht zum Beispiel aus einem Verbrennungsmotor, einem Elektromotor, einem Antriebsgetriebe und mindestens einem, dem Elektromotor zugeordneten elektrischen Speicher, wobei ein Abtriebsstrang des Verbrennungsmotors und ein Abtriebsstrang des Elektromotors mit einem Getriebeeingangsstrang des Antriebsgetriebes über jeweils eine steuerbare Kupplung so kuppelbar ist, dass der Verbrennungsmotor und/oder der Elektromotor das Fahrzeug antreiben kann (Parallelhybridbetrieb).

Beim erfindungsgemäßen Verfahren zum Betrieb des Hybridantriebs werden die jeweiligen Fahrwiderstände $F_w$ des Fahrzeuges, bestehend aus Rollwiderstand, Steigungswiderstand und Luftwiderstand indirekt ermittelt. Dazu werden permanent oder in zeitlichen Abständen die sich in Abhängigkeit eines jeweiligen Fahrzustandes ändernden Größen eines Ausgangsmoments des Hybridantriebs, einer Fahrzeugbeschleunigung und relevanter Massenträgheitsmomente rotierender Fahrzeugteile, sowie der Fahrzeugmasse ermittelt. Der jeweilige Fahrwiderstand $F_W$ ergibt sich aus einer vom Ausgangsmoment des Hybridantriebs abhängigen, jeweiligen Zugkraft $F_Z$, der Fahrzeugbeschleunigung a, sowie der reduzierten Fahrzeugmasse m, die sowohl die Fahrzeugmasse als auch die Massenträgheitsmomente rotierender Fahrzeugteile berücksichtigt. Der Zusammenhang zwischen Zugkraft $F_Z$ und dem Fahrwiderstand $F_W$ ergibt sich aus der Gleichung:

$$F_Z = m \cdot a + F_W.$$

Bei einem Parallelhybridantrieb, bei dem zum Beispiel der Abtriebsstrang des Verbrennungsmotors mit dem Abtriebsstrang eines auch als Generator arbeitenden Elektromotors gekoppelt ist, gilt für die Zugkraft $F_Z$:

$$F_Z = \frac{(M_{VM} + M_{EM})i_g \eta_g}{r_d},$$

im verbrennungsmotorischen Betrieb zu steuern/regeln, wird eine quasistationär mögliche, maximale Zugkraft $F_{Zsm}$ ermittelt, die im rein verbrennungsmotorischen Betrieb erreicht werden kann, wobei gleichzeitig der elektrische Leistungsbedarf erfüllt wird. Hat die Fahrzeugsteuerung/-regelung Einfluss auf das Antriebsgetriebe und seine Übersetzungen, so kann die quasistationär mögliche, maximale Zugkraft $F_{Zsm}$ als ein Maximum über allen möglichen Übersetzungen ermittelt werden. Bei einem manuellen Schaltgetriebe kann wahlweise auch die vom Fahrer gewählte Übersetzung für die Ermittlung der quasistationär möglichen, maximalen Zugkraft $F_{Zsm}$ zugrundegelegt werden. Die maximale Zugkraft $F_{Zsm}$ ergibt sich gemäß:

$$F_{Zsm} = \frac{(M_{VMm} + M_{EMsm})i_g \eta_g}{r_d},$$

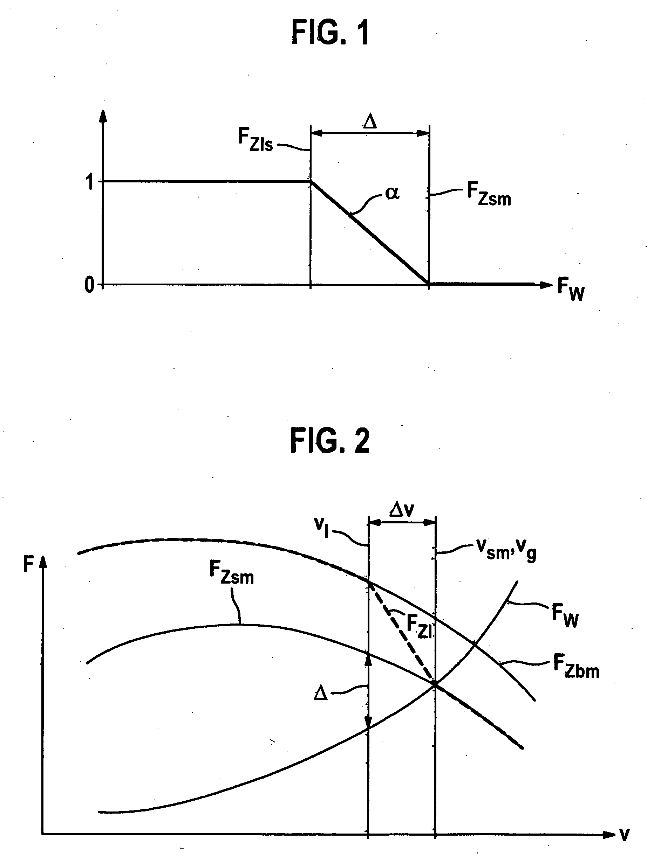

Eine mögliche Beschränkung der temporären Leistungssteigerung kann bereits erfolgen, wenn sich der Fahrwiderstand $F_W$ an die quasistationär mögliche, maximale Zugkraft im verbrennungsmotorischen Betrieb $F_{Zsm}$ annähert. Bei dieser Verfahrensweise wird die temporäre Leistungssteigerung ausschließlich für Beschleunigungsvorgänge des Fahrzeugs genutzt. Die Beschränkung kann über einen Faktor $\alpha$ bestimmt werden, der sich aus dem Fahrwiderstand $F_W$, der quasistationär möglichen, maximalen Zugkraft im verbrennungsmotorischen Betrieb $F_{Zsm}$ und einem Kräfteversatz $\Delta$ (Offset $\Delta$) ergibt. Figur 1 zeigt ein Diagramm 1, bei dem der Beschränkungsfaktor $\alpha$ über dem Fahrwiderstand Fw aufgetragen ist. Ist die maximale Zugkraft im verbrennungsmotorischen Betrieb $F_{Zsm}$ um mehr als den Kräfteversatz $\Delta$ größer als der Fahrwiderstand $F_W$ und dieser somit unterhalb eines Zugkraftlimits $F_{Zls}$, so wird die temporäre Leistungssteigerung nicht beschränkt und es gilt:

$$\alpha = 1 \qquad \text{,wenn } F_W < F_{Zsm} - \Delta = F_{Zls}.$$

Erreicht der Fahrwiderstand $F_W$ das Zugkraftlimit $F_{Zls}$, das sich aus der maximalen Zugkraft im verbrennungsmotorischen Betrieb $F_{Zsm}$ abzüglich des Kräfteversatz $\Delta$ ergibt, so wird die temporäre Leistungssteigerung linear mit der Differenz aus $F_{Zsm} - F_W$ bezogen auf den Kräfteversatz $\Delta$ immer weiter begrenzt und es gilt:

$$\alpha = \frac{F_{Zsm} - F_W}{\Delta} \qquad \text{,wenn } F_{Zsm} - \Delta < F_W < F_{Zsm}.$$

Ab dem Erreichen der maximalen Zugkraft im verbrennungsmotorischen Betrieb $F_{Zsm}$ wird die temporäre Leistungssteigerung gemäß:

$$\alpha = 0 \qquad\qquad \text{,wenn } F_W > F_{Zsm}$$

Die durch die temporäre Leistungssteigerung verfügbare Zugkraft wird durch ein Zugkraftmaximum $F_{Zl}$ nach oben begrenzt, wobei

$$F_{Zl} = \alpha \cdot F_{Zbm} + (1 - \alpha) \cdot F_{Zsm}$$

gilt. Die durch die temporäre Leistungssteigerung (Boost) maximal mögliche Zugkraft $F_{Zbm}$ ergibt sich aus:

$$F_{Zbm} = \frac{(M_{VMm} + M_{EMbm}) i_g \eta_g}{r_d},$$

mit einem meist positiven Maximalmoment $M_{EMbm}$ des Elektromotors.

Figur 2 zeigt in einem Diagramm die Abhängigkeit des Fahrwiderstands $F_w$, der bei der temporären Leistungssteigerung maximal möglichen Zugkraft $F_{Zbm}$, die bei einem verbrennungsmotorischen Betrieb maximal mögliche Zugkraft $F_{Zsm}$ und die maximal zugelassene Zugkraft $F_{Zl}$ (gestrichelte Linie) über der Fahrzeuggeschwindigkeit v (Zugkraftdiagramm). Während der Fahrwiderstand eine mit der Fahrzeuggeschwindigkeit stetig ansteigende Kennlinie $F_w$ aufweist, sind die Kennlinien der Zugkräfte $F_{Zsm}$ und $F_{Zbm}$ bei größeren Fahrzeuggeschwindigkeiten monoton fallend. Im Schnittpunkt der Kennlinien des Fahrwiderstands $F_w$ und der beim verbrennungsmotorischen Betrieb maximal möglichen Zugkraft $F_{Zsm}$ liegt die Höchstgeschwindigkeit im verbrennungsmotorischen Betrieb $v_{sm}$. In einem Geschwindigkeitsbereich $\Delta v$ wird die maximal zugelassene Zugkraft $F_{Zl}$ ab einer Beschränkungsgeschwindigkeit $v_l$, bei der der Fahrwiderstand $F_w$ nur noch um den Kräfteversatz $\Delta$ kleiner ist als die Zugkraft $F_{Zsm}$, beschränkt, wobei die maximal zugelassene Zugkraft $F_{Zl}$ gemäß der gestrichelten Linie ab der Beschränkungsgeschwindigkeit $V_l$ von dem Verlauf der Kennlinie der Zugkraft $F_{Zbm}$ bis zum Erreichen der Höchstgeschwindigkeit $v_{sm}$ auf den Verlauf der Kennlinie der Zugkraft $F_{Zsm}$ reduziert wird. Für Fahrzeuggeschwindigkeiten v oberhalb dieser als Grenzgeschwindigkeit $v_g$ wirkenden Höchstgeschwindigkeit $v_{sm}$ ist eine temporäre Leistungssteigerung durch elektromotorische Leistung nicht zugelassen. Die Kennlinie der maximal zugelassenen Zugkraft $F_{Zl}$ ist für Fahrzeuggeschwindigkeiten v oberhalb der Grenzgeschwindigkeit $v_g$ auf den Verlauf der Kennlinie der Zugkraft $F_{Zsm}$ begrenzt.

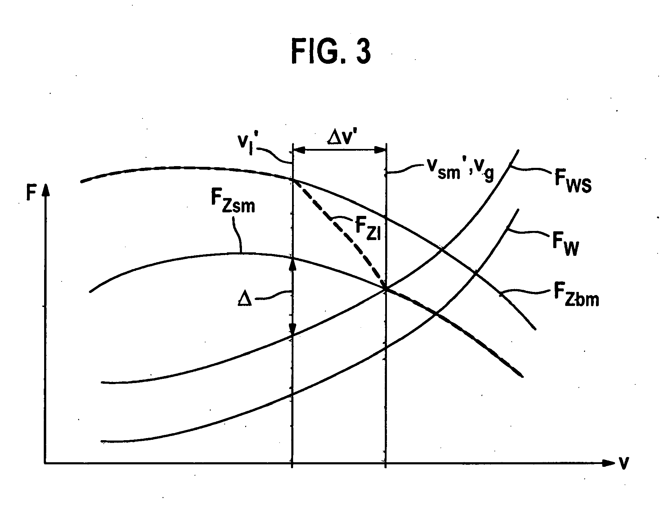

Figur 3 zeigt ein Diagramm, das im Wesentlichen dem Diagramm der Figur 2 entspricht und neben dem Fahrwiderstand $F_w$ ein durch einen höheren Steigungswiderstand erhöhten Fahrwiderstand $F_{ws}$ aufzeigt. Erhöht sich der Fahrwiderstand - zum Beispiel weil das Fahrzeug an einer Steigung einen zusätzlichen Steigungswiderstand erfährt - so verringert sich die vom jeweiligen Fahrwiderstand abhängige Höchstgeschwindigkeit im verbrennungsmotorischen Betrieb $v_{sm}$ von der im Diagramm der Figur 2 dargestellten Position $v_{sm}$ auf die im Diagramm der Figur 3 dargestellten Position $v_{sm'}$. Bei einer entsprechend kleineren Beschränkungsgeschwindigkeit $V_{l'}$ ist der Fahrwiderstand $F_{ws}$ nur noch um den gleichen Kräfteversatz $\Delta$ kleiner als die Zugkraft $F_{Zsm}$.

**Patentansprüche**

**1.** Verfahren zum Betrieb eines Hybridantriebs für ein Fahrzeug mit mindestens einem Verbrennungsmotor und mit mindestens einem Elektromotor, wobei der Verbrennungsmotor und der Elektromotor in einem Hybridbetrieb betreibbar sind, der eine temporäre Leistungssteigerung durch ein Ergänzen verbrennungsmotorischer Leistung durch elektromotorische Leistung ermöglicht, **dadurch gekennzeichnet, dass** die temporäre Leistungssteigerung nur bis zum Erreichen einer Grenzgeschwindigkeit zugelassen wird, die von einer vom jeweiligen Fahrwiderstand abhängigen Höchstgeschwindigkeit im verbrennungsmotorischen Betrieb abhängt.

**2.** Verfahren nach Anspruch 1, **dadurch gekennzeichnet, dass** der Fahrwiderstand aus sich aufgrund des jeweiligen Fahrzustandes ändernden Größen, insbesondere Ausgangsmomenten des Hybridantriebs, Fahrzeugbeschleunigung und Massenträgheitsmomenten rotierender Fahrzeugteile, sowie der Fahrzeugmasse bestimmt, insbesondere berechnet wird.

**3.** Verfahren nach einem der vorhergehenden Ansprüche, **dadurch gekennzeichnet, dass** die Höchstgeschwindigkeit im verbrennungsmotorischen Betrieb von einem jeweiligen Ladezustand mindestens eines, dem Elektromotor zugeordneten elektrischen Speichers und einem resultierenden Leistungsbedarf eines den elektrischen Speicher aufladenden Generators, sowie einem Leistungsbedarf eines Bordnetzes des Fahrzeugs abhängig ist.

**4.** Verfahren nach einem der vorhergehenden Ansprüche, **dadurch gekennzeichnet, dass** die temporäre Leistungssteigerung ausschließlich für Beschleunigungsvorgänge genutzt wird.

**5.** Verfahren nach einem der vorhergehenden Ansprüche, **dadurch gekennzeichnet, dass** die Grenzgeschwindigkeit der jeweiligen Höchstgeschwindigkeit im verbrennungsmotorischen Betrieb entspricht.

**6.** Verfahren nach einem der Ansprüche 1 bis 4, **dadurch gekennzeichnet, dass** die temporäre Leistungssteigerung zur temporären Erhöhung der Fahrzeuggeschwindigkeit über die Höchstgeschwindigkeit im verbrennungsmotorischen Betrieb genutzt wird.

**7.** Verfahren nach einem der vorhergehenden Ansprüche, **dadurch gekennzeichnet, dass** in Abhängigkeit der möglichen Übersetzungen eines Antriebsgetriebes die jeweilige Höchstgeschwindigkeit im verbrennungsmotorischen Betrieb ermittelt wird.

**8.** Verfahren nach einem der vorhergehenden Ansprüche, **dadurch gekennzeichnet, dass** kinetische Energie des Fahrzeugs beim Bremsen zum Aufladen des elektrischen Speichers durch den Generator genutzt wird.

**9.** Verfahren nach einem der vorhergehenden Ansprüche, **dadurch gekennzeichnet, dass** die temporäre Leistungssteigerung nur bis zu einer vorgebbaren Maximalzeitspanne möglich ist.

**10.** Verfahren nach einem der vorhergehenden Ansprüche, **dadurch gekennzeichnet, dass** die temporäre Leistungssteigerung nur bei einem Ladezustand des elektrischen Speichers oberhalb einer vorgegebenen Ladungsschwelle erfolgt.

**11.** Verfahren nach einem der vorhergehenden Ansprüche, **dadurch gekennzeichnet, dass** der elektrische Speicher eine wiederaufladbare Batterie ist.

**12.** Verfahren nach einem der vorhergehenden Ansprüche, **dadurch gekennzeichnet, dass** der Elektromotor den Generator bildet.

**Claims**

**1.** Method for operating a hybrid drive for a vehicle having at least one internal combustion engine and having at least one electric motor, wherein the internal combustion engine and the electric motor can be operated in a hybrid operating mode which permits a temporary increase in power by adding electromotive power to combustion engine power, **characterized in that** the temporary increase in power is permitted only up to the time when a limiting speed is reached, which limiting speed depends on a maximum speed, dependent on the respective driving resistance, in the internal combustion engine operating mode.

**2.** Method according to Claim 1, **characterized in that** the driving resistance is determined, in particular calculated, from variables which change owing to the respective driving state, these being in particular the output torques of the hybrid drive, the acceleration of the vehicle and moments of mass inertia of rotating vehicle parts, as well as the mass of the vehicle.

**3.** Method according to one of the preceding claims, **characterized in that** the maximum speed in the internal combustion engine operating mode is dependent on a respective charge state of at least one electric store which is assigned to the electric motor, and a resulting power demand of a generator which charges the electric store, as well as a power demand of an on-board power system of the vehicle.

**4.** Method according to one of the preceding claims, **characterized in that** the temporary increase in power is used exclusively for acceleration processes.

**5.** Method according to one of the preceding claims, **characterized in that** the limiting speed corresponds to the respective maximum speed in the internal combustion engine operating mode.

**6.** Method according to one of Claims 1 to 4, **characterized in that** the temporary increase in power is used to temporarily increase the speed of the vehicle above the maximum speed in the internal combustion engine operating mode.

**7.** Method according to one of the preceding claims, **characterized in that** the respective maximum speed in the internal combustion engine operating mode is determined as a function of the possible transmission ratios of a drive transmission.

**8.** Method according to one of the preceding claims, **characterized in that** kinetic energy of the vehicle is used to charge the electric store by the generator during braking.

**9.** Method according to one of the preceding claims, **characterized in that** the temporary increase in power is possible only up to a predefinable maximum time period.

**10.** Method according to one of the preceding claims, **characterized in that** the temporary increase in power takes place only in a charge state of the electric store above a predefined charge threshold.

**11.** Method according to one of the preceding claims, **characterized in that** the electric store is a rechargeable battery.

**12.** Method according to one of the preceding claims, **characterized in that** the electric motor forms the generator.

**Revendications**

**1.** Procédé pour faire fonctionner un entraînement hybride pour un véhicule comprenant au moins un moteur à combustion interne et au moins un moteur électrique, le moteur à combustion interne et le moteur électrique pouvant être entraînés en mode hybride, qui permet une augmentation temporaire de la puissance en complétant la puissance du moteur à combustion interne par une puissance du moteur électrique, **caractérisé en ce que** l'augmentation temporaire de puissance n'est permise qu'une fois atteinte une vitesse limite, qui dépend d'une vitesse maximale dépendant de la résistance à l'avancement pendant le mode de fonctionnement par moteur à combustion interne.

**2.** Procédé selon la revendication 1, **caractérisé en ce que** la résistance à l'avancement est déterminée, notamment calculée, à partir de grandeurs variant en fonction de l'état de conduite respectif, notamment de couples de départ de l'entraînement hybride, de l'accélération du véhicule et des couples d'inertie de masse des pièces rotatives du véhicule, ainsi que de la masse du véhicule.

**3.** Procédé selon l'une quelconque des revendications précédentes, **caractérisé en ce que** la vitesse maximale en mode de fonctionnement par moteur à combustion interne dépendant d'un état de charge respectif d'au moins un accumulateur électrique associé au moteur électrique, et d'un besoin de puissance en résultant d'un générateur chargeant l'accumulateur électrique, ainsi que d'un besoin en puissance d'un réseau de bord du véhicule.

**4.** Procédé selon l'une quelconque des revendications précédentes, **caractérisé en ce que** l'augmentation temporaire de puissance est utilisée exclusivement pour des opérations d'accélération.

**5.** Procédé selon l'une quelconque des revendications précédentes, **caractérisé en ce que** la vitesse limite correspond à la vitesse maximale respective en mode de fonctionnement par moteur à combustion interne.

**6.** Procédé selon l'une quelconque des revendications 1 à 4, **caractérisé en ce que** l'augmentation temporaire de puissance est utilisée pour augmenter temporairement la vitesse du véhicule au-dessus de la vitesse maximale en mode de fonctionnement par moteur à combustion interne.

**7.** Procédé selon l'une quelconque des revendications précédentes, **caractérisé en ce que** l'on détermine la vitesse maximale respective en mode de fonctionnement par moteur à combustion interne en fonction des transmissions possibles d'une transmission d'entraînement.

8. Procédé selon l'une quelconque des revendications précédentes, **caractérisé en ce que** l'énergie cinétique du véhicule est utilisée lors du freinage pour charger l'accumulateur électrique par le générateur.

9. Procédé selon l'une quelconque des revendications précédentes, **caractérisé en ce que** l'augmentation temporaire de puissance n'est possible que jusqu'à un intervalle de temps maximal prédéfinissable.

10. Procédé selon l'une quelconque des revendications précédentes, **caractérisé en ce que** l'augmentation temporaire de puissance n'a lieu que dans le cas d'un état de charge de l'accumulateur électrique au-dessus d'un seuil de charge prédéfini.

11. Procédé selon l'une quelconque des revendications précédentes, **caractérisé en ce que** l'accumulateur électrique est une batterie rechargeable.

12. Procédé selon l'une quelconque des revendications précédentes, **caractérisé en ce que** le moteur électrique constitue le générateur.

# FIG. 1

# FIG. 2

# FIG. 3

**IN DER BESCHREIBUNG AUFGEFÜHRTE DOKUMENTE**

**In der Beschreibung aufgeführte Patentdokumente**

- US 5586613 A